# EUROPEAN PATENT APPLICATION

(11) **EP 2 202 631 A2**
(43) Date of publication of application: **30.06.2010**
(21) Application number: 09178733.3
(22) Date of filing: 10.12.2009
(51) Int. Cl.: G06F 3/12

(54) **Method to change thumbnail and printing control apparatus**

(30) Priority: 24.12.2008 KR 20080133038
(71) Applicant: SAMSUNG ELECTRONICS CO., LTD., Suwon-si, Gyeonggi-do (KR)
(72) Inventor: Eom, Yong-in, Gyeonggi-do (KR); Han, Young-soo, Gyeonggi-do (KR)
(74) Representative: Walaski, Jan Filip

(57) **Abstract**

A method to change a thumbnail includes the operations of selecting an XML Paper Specification (XPS) file, analyzing a thumbnail structure of the XPS file, setting a thumbnail regarding the XPS file according to the analysis, and storing an XPS file in which the thumbnail setting is changed. Accordingly, a user easily changes the thumbnail setting.

## Description

The present general inventive concept relates to a method to change a thumbnail and a printing control apparatus, and more particularly, to a method to easily change a thumbnail setting if a thumbnail is not included in a XML Paper Specification (XPS) file or if a user desires to change a thumbnail, and a printing control apparatus.

Generally, an image forming apparatus refers to an apparatus to print printing data which are generated by a terminal such as a computer on a recording medium. Such an image forming apparatus may be a copy machine, a printer, a fax machine, or a multi function peripheral (MFP) combining functions of aforementioned machines.

Some image forming apparatuses support the function of directly printing files such as PDF, TIFF, JPG, and so on. The function of directly printing files represents performing the printing operation by only transmitting a file to an image forming apparatus without executing additional application programs on terminals such as a desktop computer, a laptop computer, a personal digital assistant, a digital camera, and so on.

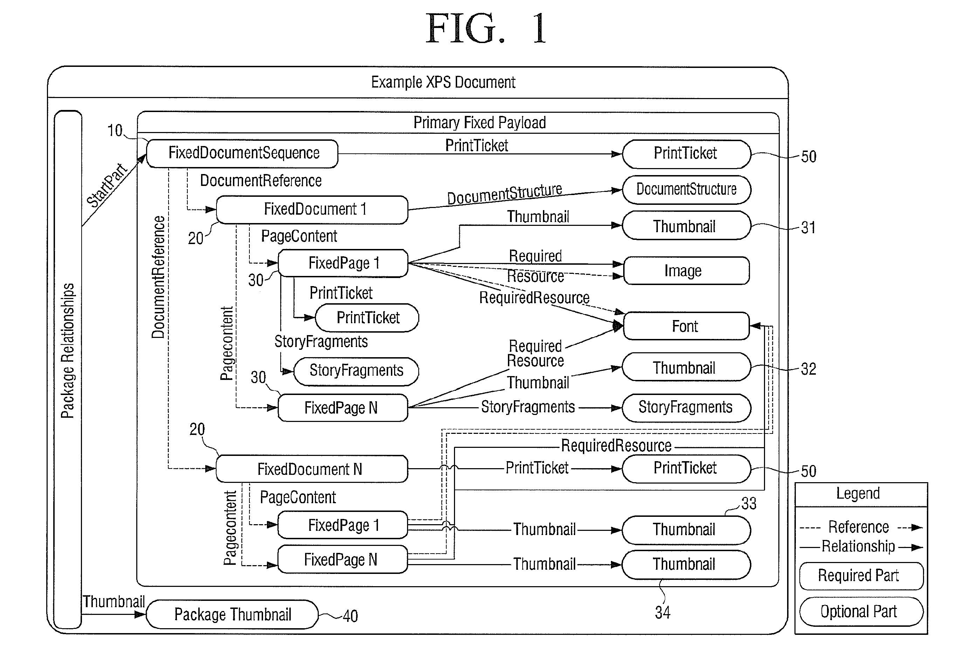

An XPS document has a fixed-layout electronic file format that preserves document formatting and can be shared, and is a zip-formatted file which includes all kinds of data and resources described by systematizing all resources required for documents or jobs in a directory structure and by writing the references therebetween using XML. Such an XPS document has a logical structure in the form of a tree having a plurality of layers, as shown in FIG. 1.

Referring to FIG. 1, the XPS file includes a hierarchical database such as a job level, a document level, and a page level. Each document level and page level includes a plurality of documents and pages, and each printing option may be differently set to each document and page and include thumbnails 31, 32, 33, 34 corresponding to respective documents or pages. The XPS file may include a package thumbnail 40 which serves as an icon corresponding to the XPS file.

However, if the thumbnails are not included in the XPS file, a conventional image forming apparatus does not support the method for adding thumbnails, and if a user desires to change the thumbnail set in the XPS file, a user must change and add various XML files and images in the XPS file. Therefore, a method to easily change thumbnails in the XPS is required.

The present general inventive concept provides a method to easily change a thumbnail setting if a thumbnail is not included in an XPS file or if a user desires to change a thumbnail, and a printing control apparatus.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing a method to change a thumbnail, including selecting an XML Paper Specification (XPS) file, analyzing a thumbnail structure of the XPS file, setting a thumbnail regarding the XPS file according to the analysis, and storing an XPS file in which the thumbnail setting is changed.

The analyzing may include analyzing the structure of job, document, and page regarding the XPS file, and recognizing whether the document and page comprise thumbnail information, respectively.

The setting the thumbnail may include setting a thumbnail using a thumbnail image in the XPS file corresponding to a thumbnail to be set or using the generated thumbnail image based on the thumbnail information.

The analyzing the thumbnail structure may include analyzing the structure of job, document, and page regarding the XPS file, and recognizing printing options of the job, document, and page, respectively.

The changing of the thumbnail may include processing a thumbnail image in a manner of at least one of rotating, combining, reducing, and enlarging according to the recognized printing option corresponding to the thumbnail to be set, and changing the processed thumbnail image to a thumbnail.

The selecting the file may include determining that an XPS file is selected if at least one of a command to print the XPS, a command to change a thumbnail, and a command to display a thumbnail is input.

The method may further include displaying thumbnail information regarding the XPS file.

The displaying may include displaying the thumbnail information through a user interface (UI) including at least one region of a first region on which a thumbnail region is selected to be used for the XPS file, a second region on which a thumbnail region for the XPS file is selected, and a third region on which an option regarding the thumbnail region is selected.

The displaying may include displaying a preview image of a thumbnail image corresponding to the user' selection if the user's selection regarding the thumbnail is received.

The setting may include setting a thumbnail corresponding to the thumbnail region selected by a user to be a package thumbnail for the XPS file.

The thumbnail may be a package thumbnail.

The foregoing and/or other features and utilities of the present general inventive concept may also be achieved by providing a printing control apparatus, including a user interface (UI) unit to receive a selection of an XML Paper Specification (XPS) file, an analyzing unit to analyze a thumbnail structure of the XPS file; a thumbnail processing unit to set a thumbnail regarding the XPS file according to the analysis, and a storage unit to store an XPS file in which the thumbnail setting is changed.

The analyzing unit may analyze the structure of job, document, and page regarding the XPS file; and recognize whether the document and page comprise thumbnail information, respectively.

The thumbnail processing unit may determine whether there is a thumbnail image corresponding to a package thumbnail to be set based on the thumbnail information, and set a package thumbnail using a thumbnail image in the XPS file or the generated thumbnail image according to the determination.

The analyzing unit may analyze the structure of job, document, and page regarding the XPS file, and recognize printing options for the job, document, and page, respectively.

The thumbnail processing unit may process a thumbnail image in a manner of at least one of rotating, combining, reducing, and enlarging according to the recognized printing option corresponding to the thumbnail to be set, and changes the processed thumbnail image to a thumbnail.

The UI unit may determine that an XPS file is selected if at least one of a command to print the XPS, a command to change a thumbnail, and a command to display a thumbnail is input.

The UI unit may display thumbnail information regarding the XPS file.

The UI unit may display the thumbnail information through a user interface (UI) including at least one region of a first region on which a thumbnail region is selected to be used for the XPS file, a second region on which a thumbnail region for the XPS file is selected, and a third region on which an option regarding the thumbnail region is selected.

The UI unit may display a preview image of a thumbnail image corresponding to the user' selection if the user's selection regarding the thumbnail is received.

The thumbnail processing unit may set a thumbnail corresponding to the thumbnail region selected by a user to be a thumbnail for the XPS file.

The thumbnail may be a package thumbnail.

The foregoing and/or other features and utilities of the present general inventive concept may be achieved by providing a printing control apparatus including a thumbnail processing unit to automatically generate a thumbnail regarding an XML Paper Specification (XPS) file according to print data parsed from the XPS file and print option data parsed from the XPS file, and a user interface to display the generated thumbnail to a user.

The foregoing and/or other features and utilities of the present general inventive concept may also be achieved by providing a printing control apparatus including an analyzing unit to analyze a print option of an XML Paper Specification (XPS) file and to apply the print option to an existing thumbnail in the XPS file to generate a new thumbnail, and a user interface to display the new thumbnail to a user.

The foregoing and/or other features and utilities of the present general inventive concept may also be achieved by providing a printing control apparatus including a user interface to receive input data from a user and to display a new thumbnail to the user, the input data including a selection of a region of a document an XML Paper Specification (XPS) file, and a controller to generate the new thumbnail according to the selection of the region of the XPS file including print data parsed from the XPS file and print option data parsed from the XPS file.

The region of the document of the XPS file may be selected from one of a specific page of the document, specific pages of the document, a region of the document, and all of the document.

The new thumbnail may replace an existing thumbnail.

The foregoing and/or other features and utilities of the present general inventive concept may also be achieved by providing a computer readable medium to contain a program to control a computer to perform a method to change a thumbnail, the method including selecting an XML Paper Specification (XPS) file, analyzing a thumbnail structure of the XPS file, setting a thumbnail regarding the XPS file according to the analysis, and storing an XPS file in which the thumbnail setting is changed.

These and/or other features and utilities of the present general inventive concept will become apparent and more readily appreciated from the following description of the embodiments, taken in conjunction with the accompanying drawings of which:
FIG. 1 is a view provided to explain a logical structure of an XPS file;
FIG. 2 is a block diagram illustrating a printing control apparatus according to an exemplary embodiment of the present general inventive concept;
FIG. 3 is a schematic view illustrating a user interface (UI) window of a printing control apparatus according to an exemplary embodiment of the present general inventive concept;
FIG. 4 is a schematic view provided to explain the process of a thumbnail image; and
FIG. 5 is a flowchart provided to explain a method to change a thumbnail according to an exemplary embodiment of the present general inventive concept.

Reference will now be made in detail to various exemplary embodiments of the present general inventive concept, examples of which are illustrated in the accompanying drawings, wherein like reference numerals refer to the like elements throughout. The embodiments are described below in order to explain the present general inventive concept by referring to the figures.

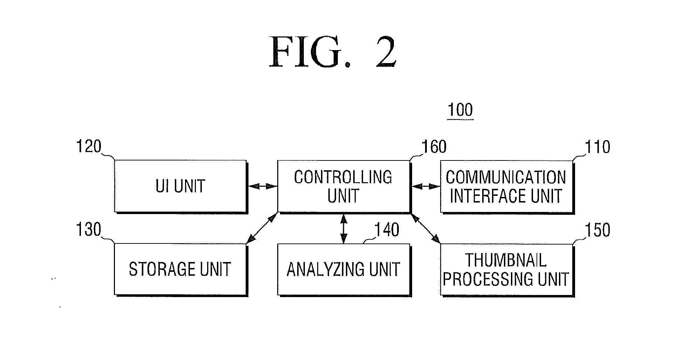

FIG. 2 is a block diagram illustrating a printing control apparatus according to an exemplary embodiment of the present general inventive concept. Referring to FIG. 2, a printing control apparatus 100 according to an exemplary embodiment of the present general inventive concept includes a communication interface unit 110, a user interface (UI) unit 120, a storage unit 130, an analyzing unit 140, a thumbnail processing unit 150, and a controlling unit 160.

The communication interface unit 110 connects the printing control apparatus to an external apparatus. The communication interface unit 110 may be implemented to be connected to an external apparatus via a local area network (LAN) and/or an internet network, and may also be implemented to be connected through a parallel port, a universal serial bus (USB) port, or a wireless module. Specifically, if the printing control apparatus 100 is a terminal such as a desktop computer, a laptop computer, a personal digital assistant (PDA), or a digital camera, the communication interface unit 110 is connected to an image forming apparatus and transmits an XML Paper Specification (XPS) file in which a thumbnail setting is changed through predetermined operations by the image forming apparatus. If the printing control apparatus 100 is an image forming apparatus such as a printer or a multi function peripheral (MFP), the communication interface unit 110 is connected to a terminal and receives an XPS file and a printing command regarding a corresponding XPS file. The communication interface unit 110 may receive an XPS file in a direct printing method or receive an XPS file from a storage medium such as a universal serial bus (USB) memory through a USB port. The communication interface unit 110 may transmit an XPS file in which a thumbnail setting is changed through predetermined operations by a terminal.

The XPS file represents printing data to which a printing option is set in a form of a tree having a plurality of nodes or layers as described above. Specifically, a separate printing option may be set for each node or layer of the XPS file and each node of the tree, and the XPS file may include thumbnails corresponding to respective documents and pages. For example, the XPS file is formed in a hierarchical structure having a job level 10, a document level 20, and a page level 30, and may include a package thumbnail 40 and thumbnails 31, 32, 33, 34 corresponding to respective page regions as shown in FIG. 1.

The package thumbnail 40 represents a representative thumbnail for a corresponding XPS file, and is used as an icon to represent the corresponding XPS file. Accordingly, if the package thumbnail 40 is included in the XPS file, the package thumbnail may be displayed as an icon instead of displaying an icon representing a general XPS file.

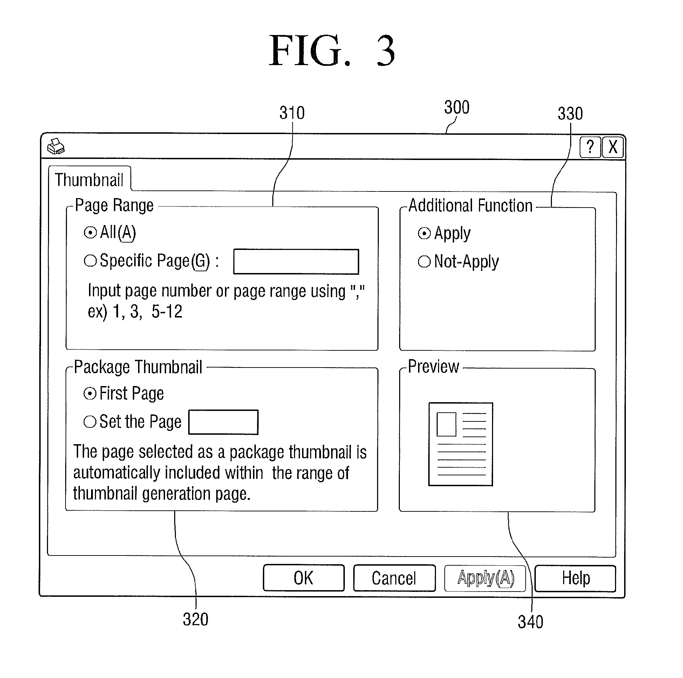

The UI unit 120 includes a plurality of function keys through which a user sets or selects various functions supported by the printing control apparatus 100. The UI unit 120 may receive a printing command, a command to change a package thumbnail, a command to display a thumbnail from a user, or may display various information provided by the printing control apparatus 100. The UI unit 120 may be implemented as an apparatus such as a touchscreen or touchpad on which a user's input and output are concurrently performed, and may also be implemented as an apparatus combining a mouse and a monitor. A user may select an XPS file using a user interface (UI) window which is provided through the UI unit 120 in order to change a thumbnail, and may recognize thumbnail information included in XPS file and set the thumbnail. The UI window provided to a user will be explained with reference to FIG. 3.

The storage unit 130 may pre-store an XPS file and store an XPS file in which a thumbnail setting is changed by performing predetermined operations. The storage unit 130 may be variously implemented as a storage medium in the printing control apparatus 100 or an external storage medium, for example a removable disk such as a USB memory, a storage medium connected to a terminal (Host), or a web server through a network.

The analyzing unit 140 analyzes the structure of an XPS file. Specifically, the analyzing unit 140 may recognize whether the XPS file includes thumbnail information for a job, document, and page, respectively. As described above, the XPS file represents a file in which various resources required for the document and job are systemized in a directory structure and the systemized resources are batched in a ZIP format. If the XPS file is decompressed, thumbnail images corresponding to the job region, document region, and page region are stored in the corresponding resource folder, e.g., in a PNG or JPEG format, and the relation files, e.g., .fdoc or .fpage, in which thumbnail information corresponding to each job region, document region, and page region is recorded, are stored in the corresponding directory.

The relation file includes thumbnail information regarding the corresponding region, and is stored for each directory corresponding to the document region and the page region. The analyzing unit 140 recognizes whether there is a thumbnail in a job region, a document region, or a page region by recognizing whether an address for a thumbnail image is recorded in the job region of the XPS file and in the relation file of each document and page, and recognizes the thumbnail information, such as a thumbnail address of a corresponding region. The analyzing unit 140 may analyze the hierarchical thumbnail structure of the corresponding XPS file using the recognized thumbnail information. The analyzing unit 140 may recognize the thumbnail information using the function 'GetThumbnail ()' which may be found on the XPS file driver.

The analyzing unit 140 searches for respective resource directories having the thumbnail images in the XPS file in order to recognize whether there is a thumbnail in the job, document, or page regions. Specifically, as the thumbnail image in the XPS file is stored in a resource folder for a corresponding region, the analyzing unit 140 searches for respective resource folders in the XPS file and thus recognizes whether a thumbnail exists by recognizing whether a thumbnail image is stored in the corresponding folder.

The analyzing unit 140 may recognize printing options of job, document, and page regions, respectively. Specifically, the analyzing unit 140 may recognize whether printing options such as an N-up printing option and a scaling printing option are set to the XPS file by checking each PrintTicket hierarchically provided in the XPS file. The PrintTicket option 50 is schematically illustrated in FIG. 1. For example, if the printing option '2-UP' is set in the XPS file, two pages are output on a single sheet of printing medium and thus a layout of an output image may be different from that of a thumbnail image. The analyzing unit 140 recognizes printing options set in the XPS file and transmits information thereof to the thumbnail processing unit 150 so as to display the thumbnail image having the same format as the output layout.

The thumbnail processing unit 150 may set a package thumbnail for the XPS file based on the analyzed thumbnail information. Specifically, the thumbnail processing unit 150 may select a document region and a page region to which the thumbnail is added with reference to the analyzed thumbnail information and the printing option. For example, the thumbnail may be added to the document region and page region to which the thumbnail is not currently set based on the analyzed thumbnail information. The thumbnail processing unit 150 may select a document region and a page region to set as a package thumbnail based on the analyzed thumbnail information and the printing option information. For example, a thumbnail may be added to document and page regions to which a thumbnail is not set currently based on the analyzed thumbnail information. The package thumbnail processing unit 150 may set specific document and page regions to be a package thumbnail based on the analyzed thumbnail information and the printing option information. For example, a region to which a package thumbnail is set may be selected according to various algorithms. For example, the second page region may be set to be a region to which a package thumbnail is set, the first page among thumbnails in the XPS file may be set to be a region to which a package thumbnail is set, or the page having the greatest bytes may be set to be a region to which a package thumbnail is set. These selections may be performed by the user's selection. Specifically, the region which is selectable by a user is displayed on the UI window, and the thumbnail processing unit 150 sets the region selected by the user to be a package thumbnail, or change a thumbnail for the region selected by the user. The UI window shown to the user will be explained with reference to FIG. 3.

The thumbnail processing unit 150 may set the selected region to be a thumbnail or a package thumbnail. Specifically, if a thumbnail exists in the selected region, the thumbnail processing unit 150 changes a setting of the relation file related to the thumbnail and sets the corresponding thumbnail image to be a thumbnail or a package thumbnail so that the thumbnail image corresponding to the selected region operates as a thumbnail. The thumbnail processing unit 150 may change a setting of the relation file related to a thumbnail using the function 'SetThumbnail ()' which may be found on the XPS driver.

Alternatively, if a thumbnail does not exist in the selected region, the thumbnail processing unit 150 parses printing data corresponding to the region to be set as a thumbnail, renders the parsed data, and generates a thumbnail image. In the case that the printing control apparatus 100 is implemented as an image forming apparatus, if the corresponding XPS file is being currently printed, or if the corresponding XPS file is completely printed and thus rendered data of the corresponding region, that is, metadata, exist, the thumbnail processing unit 150 may generate a thumbnail image using the rendered data which is generated in the process of printing the corresponding XPS file.

The size of the generated thumbnail image may be 96 DPI, or may be another predetermined size. If there is a thumbnail image in a region of the corresponding XPS file, the size of the thumbnail image in the region may be adopted.

The generated thumbnail image may be an image the size of which is reduced from a predetermined size of a corresponding document or page in a predetermined ratio, and the size may be preset to be an optimal size for the image forming apparatus by a designer or a user. The thumbnail processing unit 150 may reduce the rendered data or printing data in a predetermined size to generate a thumbnail image.

The thumbnail processing unit 150 may add the generated thumbnail image to the XPS file. Specifically, the thumbnail processing unit 150 adds the generated thumbnail image to the resource folder corresponding to the generated thumbnail image, and adds information regarding the thumbnail image added to the relation file corresponding to the job, document, or page. The thumbnail processing unit 150 may add the thumbnail image to the front of the physical regions of the corresponding XPS file to facilitate data processing. The thumbnail processing unit 150 changes a setting of the relation file related to the thumbnail so that the generated thumbnail image operates as a thumbnail or a package thumbnail, and thus sets the corresponding thumbnail image to be a package thumbnail. The thumbnail processing unit 150 may change the setting of the relation file related to the thumbnail using the function 'SetThumbnail ()' which may be found on the XPS driver.

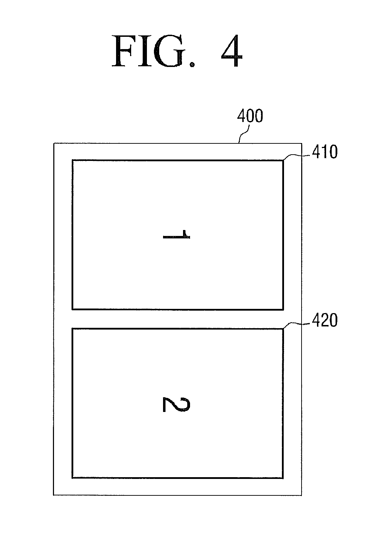

The thumbnail processing unit 150 processes a thumbnail image corresponding to a package thumbnail to be set according to the printing options analyzed by the analyzing unit 140, including information such as rotation, mergence, reduction, and enlargements. Specifically, as various printing options may be hierarchically set to an XPS file, the result that is output according to such printing options may differ from an image layout displayed on a thumbnail. The thumbnail processing unit 150 may perform image processing on the corresponding thumbnail image to display the thumbnail in the same layout as the result to be output. For example, in the case that the printing option '2-up' is set to the corresponding page, the corresponding first and second pages 410 and 420 are merged as shown in Fig. 4, and a thumbnail image 400 may be generated by rotating and reducing an image.

The analyzing unit 140 and the thumbnail processing unit 150 may be implemented in a filter module form of a print filter pipeline path of an XPS printer driver.

The controlling unit 160 may store an XPS file in which a thumbnail setting is changed in the storage unit 130. The controlling unit 160 may store the XPS file in a different name from that of the previous XPS file or may overwrite the previous XPS file. The operation may be performed according to the user's selection, or may be automatically performed without a user's additional command. If the printing control apparatus 100 is implemented as an image forming apparatus, or if the storage unit 130 is implemented as an external storage medium of the printing control apparatus 100 in this exemplary embodiment of the present general inventive concept, the controlling unit 160 may transmit the XPS file in which a thumbnail setting is changed to the corresponding terminal or a web server so that the XPS file in which the thumbnail setting is changed may be stored in a storage unit (not shown) of the terminal or in the web server.

If the above operations are performed in response to the user's printing command, the XPS file in which the package thumbnail setting is changed is printed under the control of the controlling unit 160. Specifically, if the printing control apparatus 100 is implemented using a terminal such as a personal computer (PC), the controlling unit 160 may transmit the XPS file in which the thumbnail setting is changed through the communication interface unit 110 in order to print the XPS file in which the thumbnail setting is changed. If the printing control apparatus 100 is implemented as an image forming apparatus, the controlling unit 160 may control a printing engine (not shown) to print the XPS file in which the thumbnail setting is changed.

If the printing control apparatus 100 is implemented using an image forming apparatus, the controlling unit 160 may transmit the XPS file in which the thumbnail setting is changed to a terminal (not shown). Specifically, if the XPS file is received from a terminal and the above operations are performed, the controlling unit 160 may transmit the XPS file in which the thumbnail setting is changed to the terminal through the communication interface unit 110 since the XPS file in which the thumbnail setting is changed may be used in the corresponding terminal. The controlling unit 160 may transmit the XPS file using the initially received name or another name. The operations may be performed according to the user's selection, or may be automatically performed without receiving additional commands.

If the controlling unit 160 receives a command to generate a thumbnail for an XPS file, a command to change a thumbnail, and a command to display a thumbnail through the user interface unit 120 or the communication unit 110, the controlling unit 160 may cause the above operations to be performed. If the controlling unit 160 receives a command to print an XPS file through the user interface unit 120 or the communication unit 110, the controlling unit 160 may also cause the above operations to be processed.

The printing control apparatus 100 may easily change a setting of a package thumbnail if a thumbnail is not set to the current XPS file.

According to these exemplary embodiments of the present general inventive concept, the printing control apparatus 100 includes not only a terminal such as a desk top computer PC, a laptop computer, a personal digital assistant (PDA), or a digital camera, but also an image forming apparatus such as a copy machine, an inkjet printer, a laser beam printer (LBP), or a multi function peripheral (MFP).

FIG. 3 is a schematic view illustrating a user interface (UI) window of a printing control apparatus according to an exemplary embodiment of the present general inventive concept.

Referring to FIG. 3, a user interface (UI) window 300 includes a first region 310 in which a user selects a thumbnail to be used in an XPS file, a second region 320 in which a user selects a package thumbnail region of an XPS file, a third region 330 in which a user selects an option of a package thumbnail region, and a fourth region 340 in which a preview image of a package thumbnail corresponding to the user's selection is displayed.

From the first region 310, a user may select a region of a document to manage a thumbnail in an XPS file. Specifically, if a user selects an option button "All" of the thumbnail region, a thumbnail is generated and the generated thumbnail is added to a region in which a thumbnail does not exist so that all pages in the XPS file have a thumbnail. If a user selects an option button "Specific Page", and inputs the number of pages in the input box, a thumbnail is generated or deleted on the selected page according to whether there is a thumbnail on the selected page or pages so that a thumbnail exists in the page or pages selected by the user.

In the second region 320, a region to be set as a package thumbnail is selected by a user. Specifically, if the user selects an option button "First Page" of a package thumbnail, the thumbnail corresponding to the first page is set to be a package thumbnail, and if the user inputs a page number in an input box "Set the Page", a thumbnail corresponding to the input page is set to be a package thumbnail.

In the third region 330, an additional option for a package thumbnail region is selected. If a user selects an additional option for a package thumbnail region, an image corresponding to a package thumbnail is processed.

In the fourth region 340, a preview image of a package thumbnail region is displayed. The fourth region 340 displays a preview image of the thumbnail to be applied in response to the selection in the second and third regions 320, 330.

The printing control apparatus 100 according to an exemplary embodiment of the present general inventive concept easily changes the package thumbnail setting if a package thumbnail is not set to a current XPS file, and thus a user's convenience is improved since it is possible for the user to mange a thumbnail in an XPS.

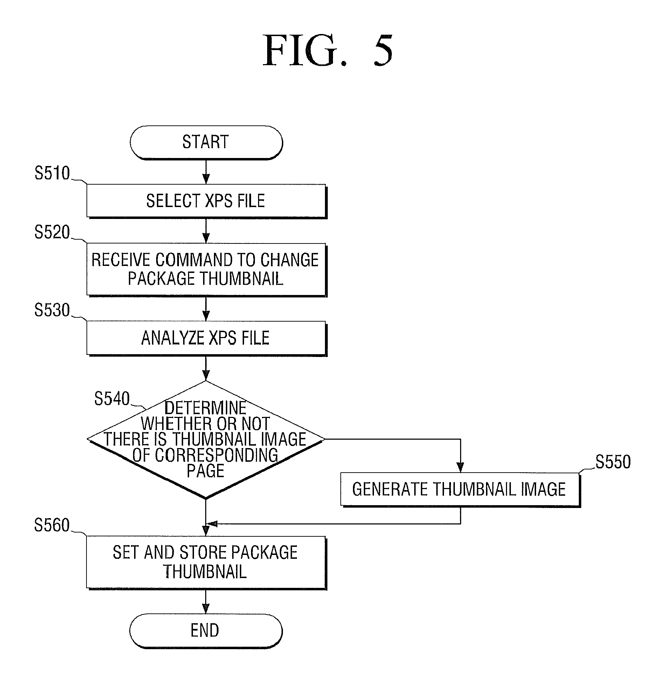

FIG. 5 is a flowchart provided to explain a method to change a thumbnail according to an exemplary embodiment of the present general inventive concept.

Referring to FIG. 5, if a user selects an XPS file to change a thumbnail for the XPS file in operation S510, and if a command to change a package thumbnail regarding to the selected XPS file is received in operation S520, the structure of the selected XPS file is analyzed in operation S530. Specifically, the command to change a package thumbnail may be a command to change a special thumbnail, a command to print an XPS, a command to display a thumbnail for an XPS file, or a command to generate a thumbnail. If a command to generate a package thumbnail is input, the structure of the job, document, and page of the corresponding XPS file is analyzed, and whether there is a thumbnail in a document region and a page region and thumbnail information such as an address of a thumbnail image corresponding to a thumbnail may be recognized by checking whether an address of a thumbnail image is recorded in a relation file of each document and page.

In this situation, all resource directories in which a thumbnail image of an XPS file is stored are searched, and thus whether a thumbnail exists in a job region, a document region, or a page region may be recognized. Specifically, as each thumbnail image in an XPS file is stored in a resource folder corresponding to the corresponding region, whether a thumbnail exists may be recognized by searching each resource folder in an XPS file and by checking whether a thumbnail image exists in the corresponding folder.

Each printing option of a job region, a document region, and a page region is recognized in operation S530. Specifically, whether the printing options set in an XPS file such as printing options 'N-up,' or 'Scaling' are set to an XPS file may be recognized by checking each PrintTicket which hierarchically exists in an XPS file. In this situation, thumbnail information regarding the XPS file may be displayed for the user. Specifically, a UI window having the first region in which the user selects a thumbnail to be used in the XPS file, the second region in which the user selects a package thumbnail region of the XPS file, and/or the third region in which the user selects an option of a package thumbnail region may be displayed. A package thumbnail image corresponding to the user's selection of the package thumbnail may be displayed as a preview image. A UI window to be displayed is described above with reference to FIG. 3.

If the operation of analyzing the structure of an XPS file is completed, it is determined whether there is a thumbnail image corresponding to the thumbnail to be set in operation S540. If there is no thumbnail image corresponding to the package thumbnail to be set, a thumbnail image may be generated by parsing and rendering data of the corresponding document and package region in operation S550. The generated thumbnail image may be processed by incorporating rotation, combination, reduction, and enlargement according to the analyzed printing option. The operations of generating a thumbnail image and processing the image are described above with reference to the thumbnail processing unit 150 in FIG. 2.

The generated thumbnail may be added to an XPS file as a thumbnail or a package thumbnail, and the XPS file in which the package thumbnail setting is changed may be stored in operation S560. Specifically, the generated thumbnail image may be added to a resource folder corresponding to the generated thumbnail image, and information regarding the added thumbnail image may be added to the relation file corresponding to the job, document, or page. In order to easily process data, the thumbnail image may be added to the front of a physical region of the XSP file. The setting of the relation file related to the thumbnail is changed, and thus the corresponding thumbnail image may be set as a thumbnail so that the generated thumbnail image operates as the package thumbnail. The setting of the relation file related to a thumbnail may be changed using the function 'SetThumbnail ()' which may be found on the XPS driver. The XPS file in which the thumbnail setting is changed may be stored. In this situation, the XPS file may be stored with a different name from that of the previous XPS file or may overwrite the previous XPS file.

The method to change a thumbnail according to an exemplary embodiment of the present general inventive concept may allow a user to easily change not only the setting of thumbnail set to an XPS file, but also the setting of a package thumbnail in an XPS file. The method to change a thumbnail described with reference to FIG. 5 may be applied on a printing control apparatus of FIG. 2, and may also be applied to an image forming apparatus or a terminal having different structures therefrom.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Intelnet). Also, functional programs, codes, and code segments to accomplish the present general inventive concept can be easily construed by programmers skilled in the art to which the present general inventive concept pertains.

Although a few embodiments of the present invention have been shown and described, it will be appreciated by those skilled in the art that changes may be made in these embodiments without departing from the principles of the invention, the scope of which is defined in the appended claims.

## Claims

1. A method to change a thumbnail, comprising:
selecting an XML Paper Specification (XPS) file;
analyzing a thumbnail structure of the XPS file;
setting a thumbnail regarding the XPS file according to the analysis; and
storing an XPS file in which the thumbnail setting is changed.

2. The method of claim 1, wherein the analyzing the thumbnail structure comprises:
analyzing the structure of job, document, and page regarding the XPS file; and
recognizing whether the document and page comprise thumbnail information, respectively.

3. The method of claim 2, wherein the setting the thumbnail comprises:
setting a thumbnail using a thumbnail image in the XPS file corresponding to a thumbnail to be set or using the generated thumbnail image based on the thumbnail information.

4. The method of claim 1, wherein the analyzing the thumbnail structure comprises:
analyzing the structure of job, document, and page regarding the XPS file, and recognizing printing options of the job, document, and page, respectively.

5. The method of claim 4, wherein the changing of the thumbnail comprises:
processing a thumbnail image in a manner of at least one of rotating, combining, reducing, and enlarging according to the recognized printing option corresponding to the thumbnail to be set, and changing the processed thumbnail image to a thumbnail.

6. The method of one of claims 1 to 5, wherein the selecting the file comprises:
determining that an XPS file is selected if at least one of a command to print the XPS, a command to change a thumbnail, and a command to display a thumbnail is input.

7. The method of claim of one of claims 1 to 6, further comprising:
displaying thumbnail information regarding the XPS file,
wherein the displaying comprises:
displaying the thumbnail information through a user interface (UI) including at least one region of a first region on which a thumbnail region is selected to be used for the XPS file, a second region on which a thumbnail region for the XPS file is selected, and a third region on which an option regarding the thumbnail region is selected.

8. The method of claim 7, wherein the displaying comprises:
displaying a preview image of a thumbnail image corresponding to the user' selection if the user's selection regarding the thumbnail is received.

9. A printing control apparatus, comprising:
a user interface (UI) unit to receive a selection of an XML Paper Specification (XPS) file;
an analyzing unit to analyze a thumbnail structure of the XPS file;
a thumbnail processing unit to set a thumbnail regarding the XPS file according to the analysis; and
a storage unit to store an XPS file in which the thumbnail setting is changed.

10. The apparatus of claim 9, wherein the analyzing unit analyzes structures of job, document, and page regarding the XPS file; and recognizes whether the document and page comprise thumbnail information, respectively.

11. The apparatus of claim 10, wherein the thumbnail processing unit determines whether there is a thumbnail image corresponding to a package thumbnail to be set based on the thumbnail information, and sets a package thumbnail using a thumbnail image in the XPS file or the generated thumbnail image according to the determination.

12. The apparatus of claim 9, wherein the analyzing unit analyzes the structure of job, document, and page regarding the XPS file, and recognizes printing options for the job, document, and page, respectively.

13. The apparatus of claim 12, wherein the thumbnail processing unit processes a thumbnail image in a manner of at least one of rotating, combining, reducing, and enlarging according to the recognized printing option corresponding to the thumbnail to be set, and changes the processed thumbnail image to a thumbnail.

14. The apparatus of claim 9, wherein the UI unit displays the thumbnail information through a user interface (UI) including at least one region of a first region on which a thumbnail region is selected to be used for the XPS file, a second region on which a thumbnail region for the XPS file is selected, and a third region on which an option regarding the thumbnail region is selected.

15. The apparatus of claim 14, wherein the thumbnail processing unit sets a thumbnail corresponding to the thumbnail region selected by a user to be a thumbnail for the XPS file.
